# EUROPÄISCHE PATENTANMELDUNG

(11) **EP 2 600 359 A1**
(43) Veröffentlichungstag der Anmeldung: **05.06.2013**
(21) Anmeldenummer: 11191259.8
(22) Anmeldetag: 30.11.2011
(51) Int. Cl.: H01F 1/36

(54) **Magnetische Kern-Schale-Partikel**

(71) Anmelder: Evonik Degussa GmbH, 45128 Essen (DE)
(72) Erfinder: Katusic, Stipan, 65812 Bad Soden (DE); Michel de Arevalo, Aymee Lisette, 63486 Bruchköbel (DE); Herzog, Harald, 63791 Karlstein (DE); Kreß, Peter, 63791 Karlstein (DE); Meyer, Jürgen, 63811 Stockstadt (DE)

(57) **Zusammenfassung**

Magnetische Kern-Schale-Partikel,
a) die überwiegend in Form von isolierten, im Wesentlichen sphärischen Einzelpartikeln mit einem mittleren Partikeldurchmesser d₅₀ von 0,1 bis 1 µm vorliegen und
b) deren Kern Magnetit, wenigstens ein weiteres, magnetisches Eisenoxid enthält, wobei der Anteil an Magnetit mehr als 90 Gew.-% bezogen auf die Summe der Eisenoxidanteile und berechnet als Fe₃O₄, ist,
c) deren Schale im Wesentlichen aus dichtem, amorphem Siliciumdioxid besteht,
d) die Kohlenstoff enthalten und
e) die eine Zusammensetzung, jeweils bezogen auf die magnetischen Kern-Schale-Partikel von
e₁) wenigstens 80 Gew.-% Eisenoxid, gerechnet als Fe₃O₄,
e₂) 0,01 bis 0,5 Gew.-%, Kohlenstoff,
e₃) 3 bis 19,99 Gew.-% Siliciumdioxid enthalten und
e₄) die Summe der Bestandteile e₁) bis e₃) wenigstens 98 Gew.-% beträgt.

## Beschreibung

Die Erfindung betrifft magnetische Kern-Schale-Partikel und oberflächenmodifizierte, magnetische Kern-Schale-Partikel mit jeweils verbesserter Magnetisierung, deren Herstellung und deren Verwendung.

In der WO 2010/063557 werden Eisen-Silicium-Oxidpartikel offenbart, die zur induktiven Erwärmung von Materialien in einem magnetischen oder elektromagnetischen Wechselfeld eingesetzt werden können. Die Partikel weisen eine Kern-Hülle-Struktur auf, mit den Eisenoxidphasen Hämatit, Magnetit und Maghemit als Kern, einer amorphen Hülle aus Siliciumdioxid und einer oder mehreren sich zwischen Hülle und Kern befindlichen Verbindungen aus den Elementen Silicium, Eisen und Sauerstoff. Weiterhin wird offenbart, dass der Kern 1 - 10 Gew.-% Hämatit mit einer Kristallitgröße von 20 - 120 nm, 20 - 50 Gew.-% Magnetit mit einer Kristallitgröße von 20 - 60 nm und 40 - 75 Gew.-% Maghemit mit einer Kristallitgröße von 15 - 50 nm aufweisen kann. Die Partikel werden hergestellt, indem man ein Gemisch aus Siliciumverbindungen, von denen eine Monosilan ist, und einer Eisenverbindung in einer Wasserstoff/Sauerstoffflamme umsetzt.

Es hat sich gezeigt, dass die in WO 2010/063557 offenbarten Partikel bei Verfahren in denen als abschließender Reaktionsschritt eine Abtrennung der magnetischen Partikel erforderlich ist, oft zu klein sind und über eine nicht ausreichende Magnetisierung verfügen. Die technische Aufgabe der vorliegenden Erfindung bestand daher in der Bereitstellung von magnetischen Partikeln, die gegenüber dem Stand der Technik größere Partikeldimensionen und eine höhere Magnetisierung aufweisen.

Gegenstand der Erfindung sind magnetische Kern-Schale-Partikel,
a) die überwiegend in Form von isolierten, im Wesentlichen sphärischen Einzelpartikeln mit einem mittleren Partikeldurchmesser d₅₀ von 0,1 bis 2 µm vorliegen und
b) deren Kern Magnetit, wenigstens ein weiteres, magnetisches Eisenoxid enthält, wobei der Anteil an Magnetit mehr als 90 Gew.-%, bevorzugt 91 bis 98 Gew.-%, bezogen auf die Summe der Eisenoxidanteile und berechnet als Fe₃O₄, ist,
c) deren Schale im Wesentlichen aus dichtem, amorphem Siliciumdioxid besteht,
d) die Kohlenstoff enthalten und
e) die eine Zusammensetzung, jeweils bezogen auf die magnetischen Kern-Schale-Partikel von
   e₁) wenigstens 80 Gew.-% Eisenoxid, bevorzugt 85 bis 95 Gew.-%, jeweils gerechnet als Fe₃O₄,
   e₂) 0,01 bis 0,5 Gew.-%, bevorzugt 0,05 bis 0,2 Gew.-%, Kohlenstoff,
   e₃) 3 bis 19,5 Gew.-%, bevorzugt 5 bis 14,5 Gew.-%, Siliciumdioxid enthalten und
   e₄) die Summe der Bestandteile e₁) bis e₃) wenigstens 98 Gew.-% beträgt.

Die Kern-Schale-Struktur der erfindungsgemäßen Partikel lässt sich beispielsweise mittels TEM (Transmissions-Elektronen-Mikroskopie) feststellen. das TEM zeigt auch, dass die erfindungsgemäßen Partikel überwiegend in Form von isolierten Einzelpartikeln vorliegen. Unter "überwiegend" ist dabei zu verstehen, dass bei der Auszählung von ca. 1000 bis 2000 Partikeln einer TEM-Aufnahme wenigstens 70%, bevorzugt wenigstens 80%, besonders bevorzugt wenigstens 90%, ganz besonders bevorzugt wenigstens 98% als isolierte Einzelpartikel vorliegen, der Rest jeweils als aggregierte Partikel, bei denen mindestens zwei Einzelpartikel fest miteinander verwachsen sind. Die erfindungsgemäßen Partikel zeigen im TEM ein im Wesentlichen sphärisches Aussehen. Im "wesentlichen" soll bedeuten, dass auch ellipsoide oder knollenförmige Partikel vorliegen können, jedoch beispielsweise keine nadelförmigen. Der d₅₀-Wert wird ermittelt aus der Bildauszählung von TEM-Aufnahmen. Unter dem d₅₀-Wert ist der Medianwert der Gewichtsverteilung zu verstehen. Bevorzugt ist ein d₅₀-Wert von 0,2 bis 1 µm.

Die BET-Oberfläche der Partikel beträgt bevorzugt 3 bis 20 m²/g. Besonders bevorzugt ist ein Bereich von 5 bis 10 m²/g.

Neben Magnetit enthält der Kern noch mindestens ein weiteres Eisenoxid. Bevorzugt handelt es sich dabei um Wüstit und/oder Maghemit, die mit einem Anteil von 1 bis 9 Gew.-%, bezogen auf die Summe der Eisenoxidanteile und berechnet als Fe₃O₄, vorliegen können. Es können weiterhin noch Spurenanteile an amorphem Eisenoxid, sowie und Hämatit β-Fe₂O₃ und ε-Fe₂O₃ vorliegen. Die Zusammensetzung der kristallinen Kernbestandteile kann durch Röntgendiffraktometrie unter Verwendung von Co-K_{α}-Strahlung in einem Winkelbereich 20 von 10 - 100° erfolgen. Die Reflexe des Magnetits und des Maghemits überlagern sehr stark. Der Maghemit ist signifikant anhand der Reflexe (110) und (211) im vorderen Winkelbereich nachweisbar. Die quantitative Phasenanalyse wird mit Hilfe der Rietveld-Methode ausgeführt, Fehler ca. 10% relativ.

Die Schale der erfindungsgemäßen Partikel besteht im Wesentlichen aus dichtem, amorphem Siliciumdioxid besteht. Unter "im Wesentlichen" soll verstanden werden, dass die Schale Anteile an Kohlenstoff enthalten kann. Unter amorph wird ein Material verstanden, bei dem mit den üblichen Methoden der Röntgendiffraktometrie keine Beugungssignale erfasst werden können. Bei der äußeren Hülle handelt es sich um eine dichte Hülle. Unter dicht ist zu verstehen, dass bei Kontakt der Partikel mit Salzsäure unter bestimmten Reaktionsbedingungen weniger als 100 ppm Eisen nachweisbar sind. Dabei werden bei Raumtemperatur 0,33 g der Partikel 15 Minuten lang in Kontakt mit 20 ml 1 N Salzsäurelösung gebracht. Ein Teil der Lösung wird anschließend mittels geeigneter Analysetechniken, beispielsweise ICP (inductively coupled plasma spectroscopy) auf Eisen untersucht. Die Dicke der Schale beträgt bevorzugt 2 - 20 nm, besonders bevorzugt 5 - 15 nm.

Außerdem enthalten die erfindungsgemäßen Partikel noch Kohlenstoff. Dieser kann sich im Kern oder in Kern und Schale befinden. Es hat sich gezeigt, dass sich Anteile an Kohlenstoff, wie in der vorliegenden Erfindung beansprucht, positiv auf die spezifische Magnetisierung und der spezifischen Leitfähigkeit der Partikel auswirken. In einer bevorzugten Ausführungsform handelt es sich bei diesem Kohlenstoff um einen der graphitischen Kohlenstoff, aliphatischen Kohlenstoff und C-O funktionellen Kohlenstoff als Hauptbestandteile aufweist. Dies lässt sich aus der Gauß/Lorentz-Kurvenzerlegung der durch Röntgen-Photoelektronen-Spektroskopie (XPS) ermittelten C1 s Signale ermitteln. Der graphitische Kohlenstoff weist eine Bindungsenergie von 283,8 - 284,4 eV, der aliphatische Kohlenstoff eine Bindungsenergie von 284,6 - 285,3 eV und der C-O funktionelle Kohlenstoff eine Bindungsenergie von 285,5 - 287,0 eV auf. Der Anteil der Kohlenstofftypen mit einer Bindungsenergie von 280,0 - 285,3 mV beträgt, in Summe, bezogen auf das C1s Signal, in der Regel wenigstens 50%, bevorzugt 60 bis 100%. Der Anteil der Kohlenstofftypen mit einer Bindungsenergie von 285,4 - 289,0 mV beträgt, in Summe, bezogen auf das C1 s Signal, in der Regel maximal 20%, bevorzugt 10 bis 0 %.

Darüber können die erfindungsgemäßen Partikel noch geringe Anteile an Verunreinigungen enthalten, die aus den Einsatzstoffen stammen und/oder prozessbedingt sind. In der Regel beträgt der Anteil an Verunreinigungen maximal 2 Gew.-%, bevorzugt weniger als 1,0 Gew.-% und besonders bevorzugt weniger als 0,5 Gew.-%.

Die erfindungsgemäßen magnetischen Kern-Schale-Partikel weisen bevorzugt eine spezifische maximale Magnetisierung Mₛ von mindestens 50, besonders bevorzugt von 55 bis 80, ganz besonders bevorzugt von 60 bis 70 Am² pro kg der magnetischen Kern-Schale-Partikel auf. Mₛ wurde bestimmt mittels eines Alternating-Gradient Magnetometers (AGM) vom Typ Micromag 2900 der Firma Princeton.

Die erfindungsgemäßen magnetischen Kern-Schale-Partikel weisen zudem auf ihrer Oberfläche Hydroxylgruppen auf. Diese können mit anorganischen und organischen Mitteln zur Modifizierung der Oberfläche unter Bildung einer Van-der-Waals-Wechselwirkung, einer ionischen oder kovalenten Bindung reagieren und dadurch die Oberfläche der erfindungsgemäßen magnetischen Kern-Schale-Partikel modifizieren.

Die erfindungsgemäßen Kern-Schale Partikel liegen überwiegend in Form von isolierten, im wesentlichen sphärischen Einzelpartikeln mit hoher Magnetisierung und Leitfähigkeit vor. Die Schale bewirkt eine hohe chemische Stabilität.

Ein weiterer Gegenstand der Erfindung ist ein Verfahren zur Herstellung der magnetischen Kern-Schale-Partikel bei dem man
a) in einer ersten Reaktionszone ein Aerosol, welches aus der Verdüsung einer Lösung, die wenigstens eine oxidierbare, kohlenstoffenthaltende Eisen-(II)-verbindung und eines Traggases resultiert, einer Flamme zuführt, die gebildet wird aus der Reaktion eines Brenngases mit einem Sauerstoff enthaltenden Gas, wobei in der ersten Reaktionszone lambda < 1 ist
b) das Reaktionsgemisch aus der ersten Reaktionszone in einer zweiten Reaktionszone mit wenigstens einer oxidierbaren und/oder hydrolysierbaren Siliciumverbindung, dampfförmig oder in Form eines Aerosoles, reagieren läßt,
c) wobei die Menge an oxidierbarer, Kohlenstoff enthaltender Eisen-(II)-verbindung und oxidierbaren und/oder hydrolysierbaren Siliciumverbindung so gewählt, dass der Anteil an oxidierbarer, Kohlenstoff enthaltender Eisen-(II)-verbindung, wenigstens 80 Gew.-% Eisenoxid, gerechnet als Fe₃O₄, und an oxidierbarer und/oder hydrolysierbarer Siliciumverbindung 3 bis 19,99 Gew.-%, gerechnet als SiO₂ beträgt, bezogen auf die Summe von Fe₃O₄ und SiO₂,
d) nachfolgend das Reaktionsgemisch, gegebenenfalls kühlt, bevorzugt durch Einspeisung von Wasser, und nachfolgend den Feststoff von gas- oder dampfförmigen Stoffen abtrennt.

Es ist für das Verfahren wesentlich, dass lambda < 1 ist. Es wird davon ausgegangen, dass der in den erfindungsgemäßen Partikeln vorliegende Kohlenstoff aus der nicht vollständigen Verbrennung der Einsatzstoffe resultiert.

Die oxidierbare, kohlenstoffenthaltende Eisen-(II)-verbindung wird als Aerosol eingebracht. Die Aerosolbildung erfolgt aus einer die oxidierbare, kohlenstoffenthaltende Eisen-(II)-verbindung enthaltenden Lösung mittels eines Traggases und einer Zwei- oder Mehrstoffdüse. Das Aerosol weist bevorzugt eine mittlere Tröpfchengröße von nicht mehr als 150 µm auf. Besonders bevorzugt sind Werte von 20 bis 100 µm. Es hat sich gezeigt, dass es für die Bildung isolierter Partikel dadurch begünstigt werden kann, indem in der ersten Reaktionszone als Traggas ein Wasserdampf enthaltendes Gasgemisch oder Wasserdampf selbst eingesetzt werden. Der Wasserdampf sollte eine Temperatur von 160 bis 180°C und einen Druck von ca. 4 bis 6 bar aufweisen. Weiterhin ist es vorteilhaft, wenn das Aerosol ein Gewichtsverhältnis Lösung / Wasserdampf von 2 bis 4 aufweist.

Die oxidierbare, kohlenstoffenthaltende Eisen-(II)-verbindung wird als Aerosol eingebracht. Die Aerosolbildung erfolgt aus einer Lösung mittels eines Traggases und einer Zwei- oder Mehrstoffdüse.

Als oxidierbare, kohlenstoffenthaltende Eisen-(II)-verbindung wird bevorzugt wenigstens ein Eisen-(II)-carboxylat und/oder Eisen-(II)-alkoxid eingesetzt. Besonders bevorzugt werden Eisen-(II)-Salze gesättigter C₄-C₁₂ Alkylcarbonsäuren eingesetzt. Ganz besonders bevorzugt ist Eisen-(II)-2-ethylhexanoat. Die oxidierbare, kohlenstoffenthaltende Eisen-(II)-verbindung wird bevorzugt in einem organischen Lösungsmittel oder einem organischen Lösungsmittelgemisch gelöst. Als Lösungsmittel oder Bestandteil des Lösungsmittels eignen sich besonders C₄-C₁₂ Alkylcarbonsäuren. Ganz besonders bevorzugt ist 2-Ethylhexansäure. Insbesondere eignet sich eine Lösung, in der ein Eisen(II)-Salz einer gesättigten C₄-C₁₂ Alkylcarbonsäure in einem die korrespondierende gesättigte C₄-C₁₂ Alkylcarbonsäure enthaltenden Lösungsmittel vorliegt, beispielsweise Eisen-(II)-2-ethylhexanoat in 2-Ethylhexansäure.

Der Gehalt an oxidierbarer, Kohlenstoff enthaltender Eisen-(II)-verbindung beträgt bevorzugt 20 bis 60 Gew.-%, bezogen auf die Lösung.

Als Brenngase können bevorzugt Wasserstoff, Methan, Ethan und/oder Propan eingesetzt werden. Besonders bevorzugt ist Wasserstoff. Als Sauerstoff enthaltendes Gas wird hauptsächlich Luft oder mit Sauerstoff angereicherte Luft eingesetzt.

Für die Stabilität der Flamme kann es vorteilhaft sein, die Menge an Luft aufzuteilen, in einen Primärluftstrom und einen Sekundärluftstrom. Der Primärluftstrom wird axial dem Brenner zugeführt. In ihn wird das Aerosol eingespeist. Der Sekundärluftstrom ist ein Strom, der bevorzugt tangential eingebracht wird und zu einer Erhöhung der Verbrennungsgeschwindigkeit beiträgt.

Lambda ist definiert als der Quotient aus in Reaktionszone 1 vorhandenem Sauerstoff zu in Reaktionszone 1 stöchiometrisch benötigter, zur Verbrennung des Brenngases und der Lösung erforderlichen Sauerstoffmenge. Bevorzugt ist 0,5 ≤ lambda ≤ 0,95 und besonders bevorzugt 0,6 ≤ lambda ≤ 0,8.

Für die Herstellung der erfindungsgemäßen Partikel ist es erforderlich, dass die Reaktion so geführt wird, dass die Zugabe des die Schale bildenden Einsatzstoffes nach Zugabe des den Kern bildenden Einsatzstoffes erfolgt. Die Zuführung des den Kern bildenden Einsatzstoffes erfolgt in einer ersten Reaktionszone. In der zweiten Reaktionszone erfolgt die Zugabe der oxidierbarer und/oder hydrolysierbarer Siliciumverbindung. Diese wird bevorzugt ausgewählt aus der Gruppe bestehend aus SiCl₄, CH₃SiCl₃, (CH₃)₂SiCl₂, (CH₃)₃SiCl, HSiCl₃, (CH₃)₂HSiCl und CH₃C₂H₅SiCl₂, den cyclischen Polysiloxanen der allgemeinen Formel [-O-Si(CH₃)₂]ₙ mit n = 3, 4, 5, SiH₄, Si(OC₂H₅)₄ und/oder Si(OCH₃)₄. Besonders bevorzugt wird Si(OC₂H₅)₄ oder [-O-Si(CH₃)₂]₄ eingesetzt. Die Siliciumverbindung kann beispielsweise mittels Wasserdampf und/oder Luft eingebracht werden.

In der zweiten Reaktionszone kann ein Überschuss oder ein Unterschuss an Sauerstoff vorliegen. Der Überschuss oder Unterschuss bezieht sich auf den Quotienten aus der Summe von in Reaktionszone 2 vorhandenem Sauerstoff zur Summe des für die Verbrennung der organischen Bestandteile in Reaktionszone 1 und Reaktionszone 2 stöchiometrisch benötigten Sauerstoffes.

Aus sicherheitstechnischen Gründen kann dem Abgasstrom, wie er nach der Abtrennung des Feststoffes vorliegt, eine ausreichende Menge von Luft oder eines Inertgases zugesetzt werden.

Besonders bevorzugt ist eine Ausführungsform, bei der eine Lösung, die Eisen-(II)-2-ethylhexanoat und 2-Ethylhexansäure in der der ersten Reaktionszone und Si(OC₂H₅)₄ oder [-O-Si(CH₃)_{2]4} in der zweiten Reaktionszone eingesetzt werden.

Das erfindungsgemäße Verfahren wird bevorzugt so ausgeführt, dass die mittlere Verweilzeit des Reaktionsgemisches in der ersten Reaktionszone 500 ms bis 2 s und in der zweiten Reaktionszone 500 ms bis 10 s ist.

Ein weiterer Gegenstand der Erfindung sind oberflächenmodifizierte, magnetische Kern-Schale-Partikel,
a) die überwiegend in Form von isolierten, im Wesentlichen sphärischen Einzelpartikeln mit einem mittleren Partikeldurchmesser d₅₀ von 0,1 bis 1 µm vorliegen und
b) deren Kern Magnetit, wenigstens ein weiteres, magnetisches Eisenoxid enthält, wobei der Anteil an Magnetit mehr als 90 Gew.-% bezogen auf die Summe der Eisenoxidanteile und berechnet als Fe₃O₄, ist,
c) deren Schale im wesentlichen aus dichtem, amorphem Siliciumdioxid besteht, deren Oberfläche durch Reaktion mit einem Stoff modifiziert ist, der als funktionelle Gruppe eine Carbonsäuregruppe, eine OH-Gruppe, eine SH-Gruppe, eine Epoxidgruppe, eine Aminogruppe, eine Si-OH-Gruppe, eine C-H-acide Gruppe oder ein Silan mit wenigstens einem hydrolysierbaren Rest enthält,
d) die Kohlenstoff enthalten und
e) die eine Zusammensetzung, jeweils bezogen auf die oberflächenmodifizierten, magnetischen Kern-Schale-Partikel von
   e₁) wenigstens 70 Gew.-% Eisenoxid, gerechnet als Fe₃O₄, bevorzugt 83 bis 92 Gew.-%,
   e₂) 0,1 bis 10 Gew.-%, Kohlenstoff, bevorzugt 1 bis 5 Gew.-%,
   e₃) 2,5 bis 18 Gew.-% Siliciumdioxid, bevorzugt 10 bis 15 Gew.-%, enthalten und
   e₄) die Summe der Bestandteile e₁) bis e₃) wenigstens 98 Gew.-% beträgt.

Als Verbindungen mit einer Carbonsäuregruppe als funktioneller Gruppe eignen sich C₁-C₁₂-Alkanylcarbonsäuren oder C₁-C₁₂-Alkenylcarbonsäuren, jeweils substituiert oder unsubstituiert, die entsprechenden Säurechloride, Ester, Nitrile, Isonitrile, Anhydride und Amide. Beispielhaft seien Acrylsäure, Methacrylsäure, Zitronensäure, Adipinsäure, Bernsteinsäure, Oxalsäure, Maleinsäure oder Fumarsäure genannt.

Als Verbindungen mit einer Aminogruppe als funktioneller Gruppe eignen sich Amine der allgemeinen Formel R₃₋ₙNHₙ, mit n = 0, 1 oder 2 deren Reste R unabhängig voneinander sind, mit C₁-C₁₂-Alkyl. Beispiele sind Methylamin, Dimethylamin, Trimethylamin, Ethylendiamin und Diethylentriamin.

Silane der allgemeinen Formel RₐSiX₄₋ₐ können als Mittel zur Modifizierung der Schalenoberfläche dienen, wobei
die Reste R gleich oder verschieden sind und nicht hydrolysierbare Gruppen darstellen,
die Reste X gleich oder verschieden sind und hydrolysierbare Gruppen oder Hydroxygruppen bedeuten und a den Wert 1, 2 oder 3 hat. Der Wert a ist bevorzugt 1.

In der allgemeinen Formel RₐSiX₄₋ₐ sind die hydrolysierbaren Gruppen X, die gleich oder voneinander verschieden sein können, beispielsweise Wasserstoff, Halogen oder Alkoxy. Bevorzugte hydrolysierbare Reste sind Halogen und Alkoxy. Bei den nicht hydrolysierbaren Resten R, die gleich oder voneinander verschieden sein können, kann es sich um nicht hydrolysierbare Reste R mit oder ohne eine funktionelle Gruppe handeln. Der nicht hydrolysierbare Rest R ohne funktionelle Gruppe kann beispielsweise Alkyl wie Methyl, Ethyl, n-Propyl, Isopropyl, n-Butyl, sek.-Butyl und tert.-Butyl, Pentyl, Hexyl, Octyl oder Cyclohexyl, Alkenyl wie Vinyl, 1-Propenyl, 2-Propenyl oder Butenyl, Alkinyl wie Acetylenyl oder Propargyl, Aryl wie Phenyl und Naphthyl, Tolyl, Benzyl oder Phenethyl sein. Bevorzugt können Chlorsilane oder Alkyltrialkoxysilane wie CH₃SiCl₃, CH₃Si(OC₂H₅)₃, CH₃Si(OCH₃)₃, C₂H₅SiCl₃, C₂H₅Si(OC₂H₅)₃, C₂H₅Si(OCH₃)₃, C₃H₇Si(OC₂H₅)₃, (C₂H₅O)₃SiC₃H₆Cl, (CH₃)₂SiCl₂, (CH₃)₂Si(OC₂H₅)₂, (CH₃)₂Si(OH)₂, C₆H₅Si(OCH₃)₃, C₆H₅Si(OC₂H₅)₃, C₆H₅CH₂CH₂Si(OCH₃)₃, (C₆H₅)₂SiCl₂, (C₆H₅)₂Si(OC₂H₅)₂, (i-C₃H₇)₃SiOH, CH₂=CHSi(OOCCH₃)₃, CH₂=CHSiCl₃, CH₂=CH-Si(OC₂H₅)₃, CH₂=CHSi(OC₂H₅)₃, CH₂=CH-Si(OC₂H₄0CH₃)₃, CH₂=CH-CH₂-Si(OC₂H₅)₃, CH₂=CH-CH₂-Si(OC₂H₅)₃, CH₂=CH-CH₂Si(OOOCH₃)₃, n-C₆Hi₃-CH₂-CH₂-Si(OC₂H₅)₃ und n-C₈H₁₇-CH₂CH₂-Si(OC₂H₅)₃. eingesetzt werden. Der nicht hydrolysierbare Rest R kann eine funktionelle Gruppe wie Epoxid-, Hydroxy-, Ether-, Amino- enthalten. Diese funktionellen Gruppen sind über Alkylen-, Alkenylen- oder Arylen-Brückengruppen, die durch Sauerstoff- oder -NH-Gruppen unterbrochen sein können, an das Siliciumatom gebunden. Die Brückengruppen enthalten vorzugsweise 1 bis 6 Kohlenstoffatome. Beispiele für entsprechende Silane sind N-β-aminoethyl-y-aminopropyltrimethoxysilan, N-β-aminoethyl-y-aminopropylmethyldimethoxysilan, N-β-aminoethyl-y-aminopropyldimethyl methoxysilan, N-β-aminoethyl-y-aminopropyltrimethoxysilan, 3-Aminopropyltriethoxysilan, 3-Aminopropyltrimethoxysilan, 3-Aminopropylmethyldiethoxysilan, 3-Aminopropyldimethylethoxysilan, 3-Aminopropylmethyldimethoxysilan, 3-Am inopropyldimethylmethoxysilan, Bis(2-Hydroxyethyl)-aminopropyltriethoxysilan, Bis(2-Hydroxyethyl)-aminopropylmethyldiethoxysilan, Bis[3-(Triethoxysilyl)propyl]amin, Bis[3-(Trimethyldiethoxysilyl)propyl]amin, Bis[3-(Trimethoxysilyl)propyl]ethylendiamin, Bis[3-(Methyldimethoxysilyl)propyl]ethylendiamin, N-Methylaminopropyltriethoxysilan, N-Methylaminopropylmethyldiethoxysilan, Trimethoxysilylpropylallylamin, Methyldimethoxysilylpropylallylamin, Trimethoxysilylpropyldiethylentriamin oder Methyldimethoxysilylpropyldiethylentriam in.

Bevorzugt kann als Mittel zur Modifizierung der Schalenoberfläche ein Aminosilan ausgewählt aus der Gruppe bestehend aus 3-Aminopropyl-triethoxysilan, 3-Aminopropyltrimethoxysilan, 2-Aminoethyl-3-aminopropylmethyldimethoxysilan oder ein Alkoxysilan ausgewählt aus der Gruppe bestehend aus 3-Glycidyloxypropyl-triethoxysilan, 3-Glycidyloxypropyl-trimethoxiysilan, n-Propyltrimethoxysilan, Octyl-trimethoxysilan, 3-Trimethoxysilylpropylmethacrylat sein.

Die erfindungsgemäßen oberflächenmodifizierten, magnetischen Kern-Schale-Partikel weisen bevorzugt eine spezifische maximale Magnetisierung Mₛ von mindestens 50 Am², bevorzugt 60 - 80 Am², jeweils pro kg der magnetischen Kern-Schale-Partikel beträgt. Mₛ wurde bestimmt mittels eines Alternating-Gradient Magnetometers (AGM) vom Typ Micromag 2900 der Firma Princeton.

Ein weiterer Gegenstand der Erfindung ist ein Verfahren zur Herstellung der oberflächenmodifizierten, magnetischen Kern-Schale-Partikel bei dem man die magnetischen Kern-Schale-Partikel mit einem Stoff umsetzt, der als funktionelle Gruppe eine Carbonsäuregruppe, eine OH-Gruppe, eine SH-Gruppe, eine Epoxidgruppe, eine Aminogruppe, eine Si-OH-Gruppe, eine C-H-acide Gruppe oder ein Silan mit wenigstens einem hydrolysierbaren Rest enthält.

Gewöhnlich erfolgt die Umsetzung bei Temperaturen von 100 bis 400°C über einen Zeitraum von 1 bis 4 Stunden.

Ein weiterer Gegenstand der Erfindung ist die Verwendung der erfindungsgemäßen, magnetischen Kern-Schale-Partikeln als Bestandteil von Kautschukmischungen, von Polymerzubereitungen, von Klebstoffzusammensetzungen, von durch Schweißen im elektromagnetischen Wechselfeld erhältlichen Kunststoffverbundformkörpern und zur Herstellung von Dispersionen.

### Beispiele

### Analytik

Der Gehalt an Eisenoxid wird durch Aufschluss mit NaOH, Lösen in verdünnter H₂SO₄ und nachfolgender iodometrischer Titration bestimmt. Der Gehalt an Si wird mittels ICP-OES ermittelt und anschließend als Oxid berechnet.

Der d₅₀-Wert ist definiert als Medianwert der Anzahlverteilung. Er wird bestimmt durch Bildanalyse mittels eines TEM Gerätes der Fa. Hitachi H 7500 und einer CCD-Kamera MegaView II, der Fa. SIS bestimmt. Die Bildvergrößerung zur Auswertung beträgt 30000:1 bei einer Pixeldichte von 3,2 nm. Die Anzahl der ausgewerteten Teilchen ist größer als 1000. Die Präparation erfolgt gemäss ASTM3849-89. Die untere Schwellwertgrenze in bezug auf Detektion liegt bei 50 Pixeln.

Die BET-Oberfläche wird bestimmt nach DIN 66131.

Die quantitative Bestimmung der Kernanteile erfolgt durch Röntgendiffraktometrie. (Reflexion, θ/θ- Diffraktometer, Co-Kα, U = 40kV, I = 35mA; Szintillationszähler, nachgestellter Graphitmonochromator; Winkelbereich (2Θ)/ Schrittweite/ Meßzeit: 10 - 100° / 0,04° / 6s (4h)). Mit Hilfe der Rietveld- Methode wird eine quantitative Phasenanalyse ausgeführt (Fehler ca. 10% relativ). Die quantitative Phasenanalyse erfolgt anhand des set 60 der ICDD-Datenbank PDF4+ (2010). Die quantitative Phasenanalyse und die Kristallitgrößenbestimmung erfolgen mit dem Rietveld-Programm SiroQuant®, Version 3.0 (2005).

Die Dicke der Schale wird mittels hochauflösender Transmisions-Elektronen-Mikroskopie (HR-TEM) bestimmt.

Die Bindungsenergiewerte des Kohlenstoffes in den erfindungsgemäßen Partikeln wird durch großflächige (1 cm²) XPS/ESCA-Analyse (XPS = Röntgen-Photoelektronen-Spektroskopie; ESCA = Electron Spectroscopy for Chemical Analysis) ermittelt. Die Auswertung beruht auf den allgemeinen Empfehlungen gemäß DIN-Fachbericht No. 39, DMA(A)97 des National Physics Laboratory, Teddington, U.K, und den bisherigen Erkenntnissen zur entwicklungsbegleitenden Normung des Arbeitsauschusses "Oberflächen- und Mikrobereichsanalysen" NMP816(DIN). Zudem werden die jeweils vorliegenden Vergleichsspektren aus der Fachliteratur berücksichtigt. Die Werte werden durch Untergrundsubtraktion, unter Berücksichtigung der relativen Empfindlichkeitsfaktoren der jeweils angegebenen Elektronenniveaus errechnet. Die Angabe erfolgt in Flächenprozent. Die Genauigkeit ist mit +/- 5% relativ zu veranschlagen.

### Beispiele

Eingesetzte Eisenoctoat-Lösung:
46 Gew.-% Eisen-(II)-2-ethyhexanoat,
14 Gew.-% 2-Ethylhexansäure,
40 Gew.-% n-Octan.

Beispiel 1 (gemäß Erfindung): Ein Aerosol, welches durch Verdüsen von 2,6 kg/h der Lösung mit 1,2 kg/h Wasserdampf (Temperatur: 140°C, Druck: 1 barü) mittels einer Zweistoffdüse erhalten wird, 4 Nm³/h Wasserstoff und 20 Nm³/h Luft, davon 15 Nm³/h Primärluft und 5 Nm³/h Sekundärluft, wird in einer ersten Zone zur Reaktion gebracht. Die mittlere Verweilzeit des Reaktionsgemisches in der ersten Zone beträgt ca. 652 ms. In den Strom des Reaktionsgemisches aus der ersten Zone wird ein Gemisch aus 0,19 kg/h dampfförmigem Si(OC₂H₅)₄ und 0,5 kg/h Wasserdampf gegeben. Die mittlere Verweilzeit des Reaktionsgemisches in der zweiten Zone beträgt 2,26 s. Nachfolgend wird das Reaktionsgemisch abgekühlt und der erhaltene Feststoff auf einem Filter von den gasförmigen Stoffen abgeschieden.

Die Beispiele 2, 3 und 4 werden analog Beispiel 1 ausgeführt.

Die Einsatzstoffmengen und die Reaktionsbedingungen sind in Tabelle 1 wiedergegeben.

Beispiel 5 (Vergleichsbeispiel)- Ein Aerosol, welches durch Verdüsen von 3,5 kg/h einer 25 gewichtsprozentigen, wässerigen Lösung von Eisen(II)chlorid und 4 Nm³/h Stickstoff als Verdüsungsgas bei Raumtemperatur (23°C) mittels einer Zweistoffdüse erhalten wird, 8,5 Nm³/h Wasserstoff und 22 Nm³/h Luft wird in einer ersten Zone zur Reaktion gebracht. Die mittlere Verweilzeit des Reaktionsgemisches in der ersten Zone beträgt ca. 464 ms. In den Strom des Reaktionsgemisches aus der ersten Zone wird ein Gemisch aus 0,40 kg/h dampfförmiges SiCl₄ zusammen mit 2,5 Nm³/h Stickstoff und getrennt hiervon, in Höhe der Einspeisungsstelle des Gemisches aus SiCl₄ und Stickstoff, 1 kg/h Wasserdampf gegeben. Die mittlere Verweilzeit des Reaktionsgemisches in der zweiten Zone beträgt 1,8 s. Nachfolgend wird das Reaktionsgemisch abgekühlt und der erhaltene Feststoff auf einem Filter von den gasförmigen Stoffen abgeschieden.

Die Einsatzstoffe und Reaktionsbedingungen sind in Tabelle 1 wiedergegeben. Die physikalisch-chemischen Werte des erhaltenen Feststoffes sind in Tabelle 2 wiedergegeben.

Beispiel 6 (Vergleichsbeispiel; identisch mit Beispiel 1 aus EP-A-2000439): 0,87 kg/h SiCl₄ werden verdampft und mit 7,0 Nm³/h Wasserstoff sowie 18,00 Nm³/h Luft in eine Mischzone eingespeist. Zusätzlich wird ein Aerosol, das aus einer 25 gewichtsprozentigen Lösung von Eisen(II)chlorid, entsprechend 4,60 kg/h Eisen(II)chlorid, in Wasser mittels einer Zweistoffdüse, erhalten wird, mittels eines Traggases (3 Nm³/h Stickstoff) in die Mischzone innerhalb des Brenners eingebracht. Das homogen gemischte Gas-Aerosol-Gemisch verbrennt in der ersten Zone des Reaktors bei einer adiabaten Verbrennungstemperatur von etwa 1300°C und einer Verweilzeit von etwa 40 msec. Anschließend wird dem aus der ersten Zone austretenden Reaktionsgemisch in einer zweiten Zone 6500 Nm³/h Formiergas (80:20 Vol% N₂/H₂) zugemischt. Dadurch kühlt das gesamte Reaktionsgemisch auf 250°C ab. In der dritten Zone wird der Feststoff auf einem Filter von den gasförmigen Stoffen abgeschieden und dem Abgasstrom wird 10 Nm³/h Luft beigemischt.

Die physikalisch-chemischen Werte des erhaltenen Feststoffes sind in Tabelle 2 wiedergegeben. Die Tabelle 3 zeigt die Berechnung von lambda für Beispiel 1.

Herstellung magnetischer, oberflächenmodifizierter Kern-Schale-Partikel Beispiel 7 (gemäß Erfindung): 100 Gewichtsanteile des Pulvers aus Beispiel 2 werden in einem Mischer vorgelegt und unter intensivem Mischen zunächst mit 0,5 Gewichtsanteilen Wasser und anschließend mit 5 Gewichtsanteilen Octyltrimethoxysilan besprüht. Nachdem das Sprühen beendet ist, wird über einen Zeitraum von 2 Stunden bei 120°C getempert. Das erhaltene Pulver weist einen Kohlenstoffgehalt von 2,2 Gew.-% und eine Magnetisierung Mₛ von 68 Am²/kg auf.

Beispiel 8 (gemäß Erfindung): 100 Gewichtsanteile des Pulvers aus Beispiel 2 werden in einem Mischer vorgelegt und unter intensivem Mischen mit 15 Gewichtsanteilen Trimethoxysilyl-propyl-methacrylat besprüht. Nachdem das Sprühen beendet ist, wird über einen Zeitraum von 2 Stunden bei 120°C getempert. Das erhaltene Pulver weist einen Kohlenstoffgehalt von 3,1 Gew.-% und eine Magnetisierung Mₛ von 55 Am²/kg auf.

**Tabelle 1: Einsatzstoffe und Reaktionsbedingungen**

| | | gemäß Erfindung | | | | Vergleich |
|---|---|---|---|---|---|---|
| **Beispiel** | | **1** | **2** | **3** | **4** | **5** |
| **Reaktionszone 1** | | | | | | |
| Eisen-(II)-octoatlösung | kg/h | 2,6 | 2,6 | 2,6 | 2,6 | - |
| Gehalt Eisen | Gew.-% | 7,5 | 7,5 | 7,5 | 7,5 | - |
| Eisen-(II)-chloridlösung | kg/h | - | - | - | - | 3,5 |
| Gehalt Eisen | Gew.-% | - | - | - | - | 11 |
| Wasserdampf | kg/h | 1,2 | 1,2 | 1,0 | 0,8 | - |
| Lösung / Wasserdampf | | 2,17 | 2,17 | 2,60 | 3,25 | - |
| Wasserstoff | Nm³/h | 4 | 4 | 4 | 4 | 8,5 |
| Primärluft | Nm³/h | 15 | 15 | 14 | 12 | 22 |
| Sekundärluft | Nm³/h | 5 | 8,5 | 6 | 8 | - |
| lambda | | 0,72 | 0,83 | 0,71 | 0,69 | 1,56 |
| mittlere Verweilzeit | ms | 652 | 612 | 708 | 771 | 464 |

| **Reaktionszone 2** | | | | | | |
|---|---|---|---|---|---|---|
| Si(OC₂H₅)₄ | kg/h | 0,19 | 0,19 | 0,18 | 0,18 | - |
| SiCl₄ | kg/h | - | - | - | - | 0,40 |
| Wasserdampf | kg/h | 0,5 | 0,5 | - | - | - |
| Zerstäubergas | Nm³/h | - | - | 1 | 1 | 2,5 |
| mittlere Verweilzeit | s | 2,26 | 2,10 | 2,41 | 2,58 | 1,8 |

| | | | | | | |
|---|---|---|---|---|---|---|
| a) Bspl. 3,4: Luft; Bspl. 5: Stickstoff | | | | | | |

**Tabelle 2: Physikalisch-chemische Daten**

| | | gemäß Erfindung | | | | Vergleich | |
|---|---|---|---|---|---|---|---|
| **Beispiel** | | **1** | **2** | **3** | **4** | **5** | **6** |
| Eisenoxid | Gew.-% | 84,1 | 83,0 | 83,5 | 84,2 | 68,5 | 81 |
| SiO₂ | Gew.-% | 15,5 | 14,0 | 14,7 | 14,3 | 29 | 19 |
| Kohlenstoff | Gew.-% | 0,31 | 0,16 | 0,21 | 0,14 | - | - |
| Anteile Kern | | | | | | | |
| Magnetit | Gew.-% | 91 | 96 | 90 | 95 | 61 | 45 |
| Wüstit | Gew.-% | 3 | 0 | 2 | 1 | 4 | - |
| Maghemit | Gew.-% | 0 | 0 | 2 | 1 | 26 | 31 |
| Hämatit | Gew.-% | 4 | 4 | 6 | 3 | 9 | 24 |
| BET-Oberfläche | m²/g | 7,7 | 9,2 | 7,5 | 7,5 | 22 | 30 |
| mittl. Partikeldurchmesser d₅₀ | nm | 253 | 236 | 286 | 538 | ^{a)} | ^{a)} |
| Dicke Schale | nm | 7 | 7 | 5 | 5 | n.a. | 5 |
| Magnetisierung M_{S} | Am²/kg | 70,7 | 57,0 | 64,2 | 66,8 | 51,3 | 42,9 |
| Minimaler spezifischer Widerstand | 10⁶ Ωcm | 3,60 | 4,01 | n.b. | n.b. | 1140 | 578 |
| Spezifische Leitfähigkeit | 10-³ µS/cm | 2,783 | 2,490 | n.b. | n.b. | 0,0017 | 0,0088 |

| | | | | | | | |
|---|---|---|---|---|---|---|---|
| a) Aggregate | | | | | | | |

**Tabelle 3: Berechnung von lambda für Beispiel 1**

| Sauerstoffquellen |
|---|
| Luft |
| 20 Nm³/h Luft * 0,21 = 4,2 Nm3/h O₂ * 1000 / 22,4 L/mol = 187,50 mol O₂ |
| |
| Wasser |
| w(O) in H₂O = 16 g/mol / 18 g/mol = 0,889 |
| 1,2 kg/h H₂O * 0,889 = 1,07 kg/h O |
| 1,07 kg/h O * 1000 / 32 g/mol = 33,33 mol O₂ |
| |
| Lösung |
| Zusammensetzung: 46 Gew.-% Fe(C₈H,₅O₂)₂, 14 Gew.-% C₈H₁₆O₂₁ |
| w(O) in Fe(C₈H₁₅O₂)₂= 4 * 15,9994 g/mol / 341,845 g/mol = 0,187 |
| 2,6 kg/h Lösung * 0,46 * 0,187 = 224 g/h O |
| w(O) in 2-Ethylhexansäure = 2 * 15,9994 g/mol / 144 g/mol = 0,222 |
| 2,6 kg/h Lösung * 0,14 * 0,222 = 81 g/h O |
| 224 g/h + 81 g/h = 305 g/h O / 32 g/mol = 9,53 mol O₂ |
| Summe = 187,50 mol O₂ + 33,33 mol O₂ + 9,53 mol O₂ = 230,36 mol O₂ |
| |

| Sauerstoffbedarf |
|---|
| Wasserstoff |
| 2 H₂ + O₂ -> 2 H₂O |
| *0,5 n(H₂)* = *n(O₂)* |
| 4 Nm³/h H₂ * 1000 : 22,4 L/mol = 178,5714 mol H₂ * 0,5 = 89,29 mol O₂ |
| |
| Eisenoxid |
| 3 Fe + 2 02 -> Fe₃O₄ |
| *n(O₂)* = *2 * n(Fe) l 3* |
| m(Fe) = 2,6 kg/h Lösung * 0,075 = 0,195 kg/h Fe = 195 g/h Fe |
| 195 g/h Fe : 55,845 g/mol * 2 : 3 = 2,33 mol O₂ |
| |
| Lösung |
| Zusammensetzung: 46 % Fe(C₈H₁₅O₂)₂, 14 % C₈H₁₆O₂, 40 % C₈H₁₈ |
| w(C) in Fe(C₈H₁₅O₂)₂ = 16 * 12 g/mol / 341,845 g/mol = 0,562 |
| 2,6 kg/h Lösung * 0,46 * 0,562 = 672 g/h C |
| w(C) in 2-Ethylhexansäure = 8 * 12 g/mol / 144 g/mol = 0,667 |
| 2,6 kg/h Lösung * 0,14 * 0,667 = 243 g/h C |
| w(C) in C₈H₁₈= 8 * 12 g/mol / 114 g/mol = 0,842 |
| 2,6 kg/h Lösung * 0,4 * 0,842 = 876 g/h C |
| 672 g/h C + 243 g/h C + 876 g/h C = 1791 g/h C / 12 g/mol = 149,25 mol C |
| C + O₂ -> CO₂ |
| n(O2) = n(C); 149,25 mol C = 149,25 mol O₂ |
| w(H) in Fe(C₈H₁₅O₂)₂ = 30 * 1 g/mol / 341,845 g/mol = 0,088 |
| 2,6 kg/h Lösung * 0,46 * 0,088 = 105 g/h H |
| w(H) in 2-Ethylhexansäure = 16 * 1 g/mol / 144 g/mol = 0,111 |
| 2,6 kg/h Lösung * 0,14 * 0,111 = 40 g/h H |
| w(H) in C₈H₁₈ = 18 * 1 g/mol / 114 g/mol = 0,158 |
| 2,6 kg/h Lösung * 0,4 * 0,158 = 164 g/h H |
| 105 g/h H + 40 g/h H + 164 g/h H = 309 g/h H / 2 g/mol = 154,50 mol H₂ |
| 2 H2 + O2 -> 2 H₂O |
| *0,5 n(H₂)* = *n(O₂)* 154,50 mol H₂ * 0,5 = 77,25 mol O₂ |
| Summe = 89,29 mol O₂ + 2,33 mol O₂ + 149,25 mol O₂ + 77,25 mol O₂ = 318,12 mol O₂ |
| |
| lambda = 230,36 mol O₂ 318,12 mol O₂ = 0,72 |

## Patentansprüche

1. Magnetische Kern-Schale-Partikel,
a) die überwiegend in Form von isolierten, im Wesentlichen sphärischen Einzelpartikeln mit einem mittleren Partikeldurchmesser d₅₀ von 0,1 bis 1 µm vorliegen und
b) deren Kern Magnetit, wenigstens ein weiteres, magnetisches Eisenoxid enthält, wobei der Anteil an Magnetit mehr als 90 Gew.-% bezogen auf die Summe der Eisenoxidanteile und berechnet als Fe₃O₄, ist,
c) deren Schale im Wesentlichen aus dichtem, amorphem Siliciumdioxid besteht,
d) die Kohlenstoff enthalten und
e) die eine Zusammensetzung, jeweils bezogen auf die magnetischen Kern-Schale-Partikel von
e₁) wenigstens 80 Gew.-% Eisenoxid, gerechnet als Fe₃O₄,
e₂) 0,01 bis 0,5 Gew.-%, Kohlenstoff,
e₃) 3 bis 19,99 Gew.-% Siliciumdioxid enthalten und
e₄) die Summe der Bestandteile e₁) bis e₃) wenigstens 98 Gew.-% beträgt.

2. Magnetische Kern-Schale-Partikel nach Anspruch 1,
**dadurch gekennzeichnet, dass**
der Anteil an Magnetit 91 bis 98 Gew.-% beträgt.

3. Magnetische Kern-Schale-Partikel nach den Ansprüchen 1 oder 2,
**dadurch gekennzeichnet, dass**
der Kern in Summe 1 bis 9 Gew.-% Wüstit und/oder Maghemit, bezogen auf die Summe der Eisenoxidanteile und berechnet als Fe₃O₄, enthält.

4. Magnetische Kern-Schale-Partikel nach den Ansprüchen 1 bis 3,
**dadurch gekennzeichnet, dass**
deren BET-Oberfläche 3 bis 20 m²/g ist.

5. Magnetische Kern-Schale-Partikel nach den Ansprüchen 1 bis 4,
**dadurch gekennzeichnet, dass**
die Dicke der Schale 2 bis 20 nm beträgt.

6. Magnetische Kern-Schale-Partikel nach den Ansprüchen 1 bis 5,
**dadurch gekennzeichnet, dass**
die aus der Gauß/Lorentz-Kurvenzerlegung der durch Röntgen-Photoelektronen-Spektroskopie (XPS) ermittelten C1s Signale als Hauptbestandteil graphitischen Kohlenstoff mit einer Bindungsenergie 283,8 - 284,4 eV, aliphatischen Kohlenstoff mit einer Bindungsenergie von 284,6 - 285,3 eV und C-O funktionellen Kohlenstoff mit einer Bindungsenergie von 285,5 - 287,0 eV aufweist.

7. Magnetische Kern-Schale-Partikel nach den Ansprüchen 1 bis 6,
**dadurch gekennzeichnet, dass**
deren spezifische maximale Magnetisierung Mₛ mindestens 50 Am² pro kg der magnetischen Kern-Schale-Partikel beträgt.

8. Verfahren zur Herstellung der magnetischen Kern-Schale-Partikel gemäß der Ansprüche 1 bis 7,
**dadurch gekennzeichnet, dass** man
a) in einer ersten Reaktionszone ein Aerosol, welches aus der Verdüsung einer Lösung, die wenigstens eine oxidierbare, kohlenstoffenthaltende Eisen-(II)-verbindung und eines Traggases resultiert, einer Flamme zuführt, die gebildet wird aus der Reaktion eines Brenngases mit einem Sauerstoff enthaltenden Gas, wobei in der ersten Reaktionszone lambda < 1 ist,
b) das Reaktionsgemisch aus der ersten Reaktionszone in einer zweiten Reaktionszone mit wenigstens einer oxidierbaren und/oder hydrolysierbaren Siliciumverbindung, dampfförmig oder in Form eines Aerosoles, reagieren läßt,
c) wobei die Menge an oxidierbarer, kohlenstoffenthaltender Eisen-(II)-verbindung und oxidierbaren und/oder hydrolysierbaren Siliciumverbindung so gewählt, dass der Anteil an oxidierbarer, kohlenstoffenthaltender Eisen-(II)-verbindung, wenigstens 80 Gew.-% Eisenoxid, gerechnet als Fe₃O₄, und an oxidierbarer und/oder hydrolysierbarer Siliciumverbindung 3 bis 19,99 Gew.-%, gerechnet als SiO₂ beträgt, bezogen auf die Summe von Fe₃O₄ und SiO₂,
d) nachfolgend das Reaktionsgemisch, gegebenenfalls kühlt, bevorzugt durch Einspeisung von Wasser, und nachfolgend den Feststoff von gas- oder dampfförmigen Stoffen abtrennt.

9. Verfahren nach den Anspruch 8,
**dadurch gekennzeichnet, dass**
in der ersten Reaktionszone als Traggas ein Wasserdampf enthaltendes Gasgemisch oder Wasserdampf selbst eingesetzt werden.

10. Verfahren nach den Ansprüchen 8 oder 9,
**dadurch gekennzeichnet, dass**
in der ersten Reaktionszone eine Lösung, die Eisen-(II)-2-ethylhexanoat und 2-Ethylhexansäure und in der zweiten Reaktionszone Si(OC₂H₅)₄ oder [-O-Si(CH₃)₂]₄ eingesetzt werden.

11. Verfahren nach den Ansprüchen 8 bis 10,
**dadurch gekennzeichnet, dass**
die mittlere Verweilzeit des Reaktionsgemisches in der ersten Reaktionszone 500 ms bis 2 s und in der zweiten Reaktionszone 500 ms bis 10 s ist.

12. Oberflächenmodifizierte, magnetische Kern-Schale-Partikel,
a) die die überwiegend in Form von isolierten, im Wesentlichen sphärischen Einzelpartikeln mit einem mittleren Partikeldurchmesser d₅₀ von 0,1 bis 1 µm vorliegen und
b) deren Kern Magnetit, wenigstens ein weiteres, magnetisches Eisenoxid enthält, wobei der Anteil an Magnetit mehr als 90 Gew.-% bezogen auf die Summe der Eisenoxidanteile und berechnet als Fe₃O₄, ist,
c) deren Schale im wesentlichen aus dichtem, amorphem Siliciumdioxid besteht, deren Oberfläche durch Reaktion mit einem Stoff modifiziert ist, der als funktionelle Gruppe eine Carbonsäuregruppe, eine OH-Gruppe, eine SH-Gruppe, eine Epoxidgruppe, eine Aminogruppe, eine Si-OH-Gruppe, eine C-H-acide Gruppe oder ein Silan mit wenigstens einem hydrolysierbaren Rest enthält,
d) die Kohlenstoff enthalten und
e) die eine Zusammensetzung, jeweils bezogen auf die oberflächenmodifizierten, magnetischen Kern-Schale-Partikel von
e₁) wenigstens 70 Gew.-% Eisenoxid, gerechnet als Fe₃O₄, bevorzugt 83 bis 92 Gew.-%,
e₂) 0,1 bis 10 Gew.-%, Kohlenstoff, bevorzugt 1 bis 5 Gew.-%,
e₃) 2,5 bis 18 Gew.-% Siliciumdioxid, bevorzugt 10 bis 15 Gew.-%, enthalten und
e₄) die Summe der Bestandteile e₁) bis e₃) wenigstens 98 Gew.-% beträgt.

13. Oberflächenmodifizierte magnetische Kern-Schale-Partikel nach Anspruch 12,
**dadurch gekennzeichnet, dass**
deren spezifische maximale Magnetisierung Mₛ mindestens 50 Am² pro kg beträgt.

14. Verfahren zur Herstellung der oberflächenmodifizierten, magnetischen Kern-Schale-Partikel gemäß der Ansprüche 12 oder 13,
**dadurch gekennzeichnet, dass**
man die magnetischen Kern-Schale-Partikel gemäß der Ansprüche 1 bis 7 mit einem Stoff umsetzt, der als funktionelle Gruppe eine Carbonsäuregruppe, eine OH-Gruppe, eine SH-Gruppe, eine Epoxidgruppe, eine Aminogruppe, eine Si-OH-Gruppe, eine C-H-acide Gruppe oder ein Silan mit wenigstens einem hydrolysierbaren Rest enthält.

15. Verwendung der magnetischen Kern-Schale-Partikel gemäß den Ansprüchen 1 bis 7, 12 und 13 als Bestandteil von Kautschukmischungen, als Bestandteil von Polymerzubereitungen, als Bestandteil von Klebstoffzusammensetzungen, als Bestandteil von durch Schweißen im elektromagnetischen Wechselfeld erhältlichen Kunststoffverbundformkörpern und zur Herstellung von Dispersionen.
